# EUROPÄISCHE PATENTANMELDUNG

(11) **EP 0 780 280 A1**
(43) Veröffentlichungstag der Anmeldung: **25.06.1997**
(21) Anmeldenummer: 96119654.0
(22) Anmeldetag: 07.12.1996
(51) Int. Cl.: B62B 3/10, B65D 19/38

(54) **Transportwagen für kastenförmige Möbel, insbesondere Küchenmöbel**

(30) Priorität: 21.12.1995 DE 29520319 U; 25.07.1996 DE 19630042
(71) Anmelder: LKE Gesellschaft für Logistik- und Kommunikations-Equipment mbH, 45768 Marl (DE)
(72) Erfinder: Feser, Robert, 45968 Gladbeck (DE); Grigo, Lothar, 44536 Lünen (DE)
(74) Vertreter: Cohausz & Florack

(57) **Zusammenfassung**

Die Erfindung bezieht sich auf einen Transportwagen für kastenförmige Möbel, beispielsweise Küchenmöbel. Der Transportwagen hat einen Aufbau, der es erlaubt, darauf einen Satz verschiedener Korpusse kompakt und sicher zu befestigen, so daß unter Wegfall von Verpackungsmaterial der Transportwagen den Satz Möbel vom Herstellungsort bis zum Aufstellungsort beim Käufer begleiten kann.

## Beschreibung

Der heute übliche Weg von kastenförmigen Möbeln, wie Korpussen von Küchen, vom Hersteller zum Verbraucher besteht darin, daß die Korpusse vom Fertigungsband des Herstellers mittels geeigneter Transportmittel zum Lager transportiert, hier entladen und einzeln in Kartons verpackt und abgestellt werden. Bei Bestellung einer Küche durch einen Kunden werden aus dem Lagerbestand die einzeln verpackten Korpusse zusammengestellt und mittels geeigneter Transportwagen auf einen LKW verladen, der sie zum Aufstellungsort transportiert. Am Aufstellungsort werden die Korpusse dann wieder einzeln entladen, von der Verpackung befreit und in der vorgesehenen Weise aufgestellt.

Eine solche Behandlung der Korpusse vom Fertigungsort bis zum Aufstellungsort ist in der Handhabung und in der Lagerhaltung aufwendig und erfordert darüber hinaus auch noch viel Verpackungsmaterial.

Der Erfindung liegt die Aufgabe zugrunde, Mittel zu schaffen, mit denen der Handhabungs-, Lagerhaltungs- und Verpackungsaufwand zwischen dem Herstellungsort und dem Aufstellungsort von kastenförmigen Möbeln klein gehalten werden kann.

Diese Aufgabe wird erfindungsgemäß mit einem Transportwagen für kastenförmige Möbel gelöst, der ein Fahrgestell und einen Aufbau aufweist, der einen Boden zum Aufstellen der Möbel und einen den Wagen in zwei Längsteile teilenden, aufrechtstehenden Tragrahmen mit Befestigungselementen zum Aufhängen der Möbel aufweist.

Die Erfindung basiert auf dem Gedanken, daß ein Transportmittel, daß schon am Fabrikationsort benötigt wird, die Möbel vom Fabrikationsort bis zum Aufstellungsort begleiten kann, wenn es eine kompakte Beladung mit den verschiedenartigsten Korpussen erlaubt und die Korpusse wie am Aufstellungsort darauf abgestellt und daran aufgehängt werden können. Ein solches Transportmittel macht ein mehrmaliges Umladen vom Transportmittel am Fertigungsband zum Zwischenlager und dann auf den LKW und schließlich am Aufstellungsort sowie aufwendiges Verpacken überflüssig. Auch spart es Lagerraum, weil ein für den Käufer zusammengestellter und kompakt auf den Transportwagen geladener Satz verschiedener Korpusse weniger Raum beansprucht als einzeln abgestellte Korpusse, die für das spätere Zusammenstellen viel Zugangsraum am Lager benötigen.

Der erfindungsgemäße Transportwagen kann in vielfacher Weise ausgestaltet sein.

Damit auf gleicher Höhe angeordnete Griffe an den Frontseiten der Korpusse, die während des Transportes zum Schutz ihrer Frontseiten mit ihren Frontseiten dem in der Wagenmitte angeordneten Tragrahmen zugekehrt sind, sich nicht gegenseitig behindern, ist nach einer Ausgestaltung der Erfindung vorgesehen, daß die Böden auf gegenüberliegenden Seiten des Tragrahmens gegeneinander höheversetzt sind. Zum Schutz der Frontseiten kann weiter vorgesehen sein, daß der Tragrahmen in mehreren Ebenen Holme mit Distanzelementen aufweist. Die Distanzelemente tragen dann einen die Frontseiten der Korpusse schonenden Schutzbelag.

Nach einer weiteren Ausgestaltung der Erfindung sind die Befestigungsmittel im oberen Bereich des Tragrahmens als Profilleisten ausgebildet, an denen die Korpusse mit ihren Haken aufhängbar sind, mit denen sie auch am späteren Aufstellungsort an entsprechenden Leisten aufhängbar sind. Um diese Korpusse sicher in den Profilleisten zu halten, können ihnen eine Verriegelungsvorrichtung zugeordnet sein. Vorzugsweise besteht die Verriegelungsvorrichtung aus einer in einer Kulissenführung oder an einem Gelenk geführten Schiene.

Der erfindungsgemäße Transportwagen ist auch zum Transport von langen Bauelementen wie Arbeitsplatten, Abschlußleisten und dergleichen dann gut geeignet, wenn der Tragrahmen mit mehreren in Wagenlängsrichtung versetzten Tragrahmen versehen ist. Auf diesen Tragrahmen können diese Elemente aufrechtstehend dann abgestellt werden, wenn die Tragarme mit aufrechten Stützen bestückt sind. Zum Einklemmen dieser Elemente sollte der Abstand der Stützen zueinander einstellbar sein. Dies läßt sich leicht dadurch verwirklichen, daß von einem Stützenpaar eines oder jeden Tragarmes eine Stütze von einem Schwenkarm getragen ist. Um zu verhindern, daß durch die Tragarme eine Ecke einer Arbeitsplatte oder dergleichen übermäßig belastet wird, kann mindestens ein endseitiger Tragarm verschwenkbar sein. Auf diese Art und Weise kann seine Einstellung an die Länge der Arbeitsplatte derart angepaßt werden, daß er die Arbeitsplatte an einer von der Ecke mit sicherem Abstand entfernt liegenden Stelle unterstützt.

Im folgenden wird die Erfindung anhand einer ein Ausführungsbeispiel darstellenden Zeichnung näher erläutert. Um den Laderaum auf einem LKW für leere Transportwagen möglichst klein zu halten, kann schließlich vorgesehen sein, daß die Böden zumindest im mittleren Bereich des Transportwagens hochklappbar sind. Bei hochgeklappten Böden können nämlich zwei gleichartige Transportwagen ineinander geschachtelt werden.

Im einzelnen zeigen
- Fig. 1: einen Transportwagen in Seitenansicht,
- Fig. 2: den Transportwagen gemäß Fig. 1 in Aufsicht,
- Fig. 3: den Transportwagen gemäß Fig. 1 in Stirnansicht,
- Fig. 4: eine Aufhängung mit Verriegelung für aufhängbare Korpusse im Querschnitt nach Linie A-A der Fig. 1 in vergrößerter Darstellung und
- Fig. 5: zwei ineinandergeschachtelte Transportwagen mit hochgeklappten Böden gemäß Fig. 1 in Aufsicht.

Der Transportwagen ist in Längsrichtung in zwei Hälften aufgeteilt. Er besteht aus einem Fahrgestell und einem Aufbau.

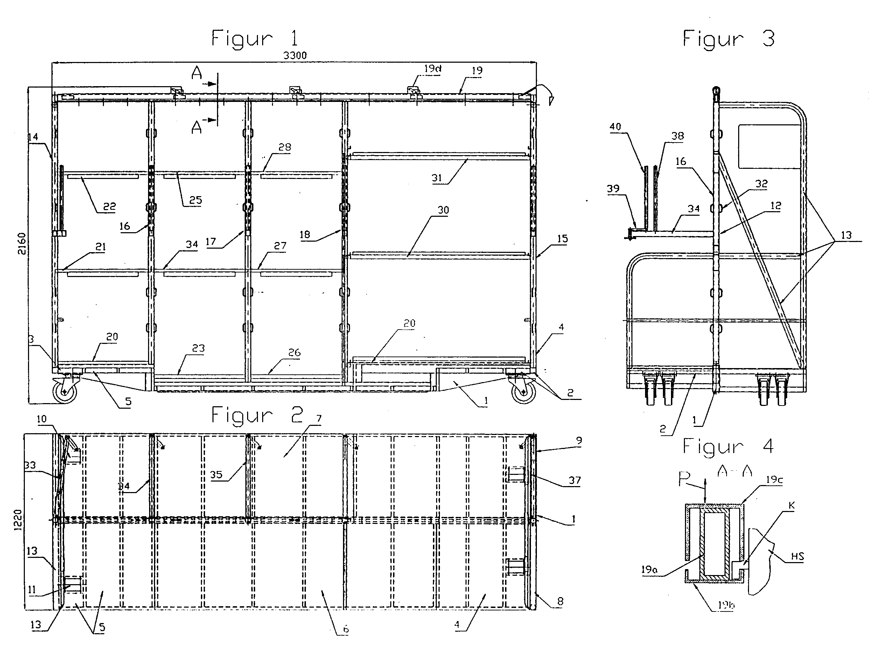

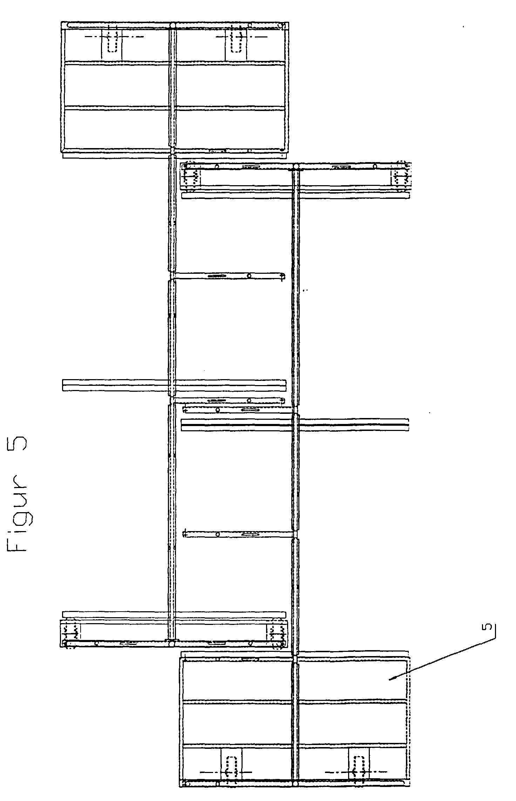

Das Fahrgestell weist einen zentralen Längsträger 1 und damit verbunden, an beiden Stirnseiten angeordnete Querträger 2, 3 auf, die integraler Bestandteil von Stirnteilen 4, 5 eines Bodens sind. Der Boden umfaßt ferner mittlere Teile 6, 7, die hochklappbar sind. Wie es im Ausführungsbeispiel der Fig. 5 für einen Transportwagen mit einem an einem Ende etwas anders aufgeteilten Boden als beim Transporter der Fig. 1 dargestellt ist. An der Unterseite der starren Teile 4, 5 des Bodens sind feststellbare Lenkrollen 8, 9, 10, 11 befestigt. Das Niveau der endseitigen Teile 4, 5 des Bodens liegt höher als das Niveau der klappbaren Teile 6, 7 des Bodens. Außerdem sind die klappbaren Böden 6, 7 auf beiden Seiten des zentralen Trägers 1 ein wenig höhenversetzt.

Auf dem zentralen Träger 1 ist ein aufrechtstehender Tragrahmen 12 befestigt. Dieser Tragrahmen 12 wird zusätzlich gehalten durch stirnseitige Versteifungskonstruktionen 13.

Der Tragrahmen besteht aus stirnseitigen und mittleren Stützen 14, 15, 16, 17, 18 und einem oberen Träger 19. Zwischen den Stützen 14, 16, 17, 18 sind fixiert angeordnete Distanzholme 20 - 28 und zwischen den Stützen 15 und 18 lösbar eingehängte Distanzholme 29 - 31 vorgesehen, die im Querschnitt ein Z-Profil aufweisen, das mit einer Schutzbeschichtung versehen ist, so daß es bei Kontakt mit den Korpussen nicht zu Beschädigung der Oberflächen der Korpusse kommt. Alle Stützen 14 - 18 tragen in verschiedenen Höhen Ösen zur Befestigung von Spanngurten zum Festzurren vom Wagen zu transportierender Korpusse.

Die Stützen 14 - 18 des Rahmen 12 tragen an einer Wagenseite Tragarme 33 - 37, die jeweils mit einer aufrechtstehenden festen Stütze 38 und einer an einem Schwenkarm 39 gehaltenen, aufrechtstehenden einstellbaren Stütze 40 bestückt sind. Auf diesen Tragarmen 33 - 37 können lange Möbelelemente, wie Arbeitsplatten und dergleichen hochkant abgestellt werden. Mittels der beweglichen Stütze 37 ist es möglich, solche Platten zwischen der festen 38 und beweglichen Stütze 40 festzuklemmen. Die Verschwenkbarkeit der verschiedenen Schwenkarme kann wechselweise sein, so daß beim Einwirken einer axialen Kraft auf die Stützen 40 sich die Stützen 40 an den festzuhaltenden Elementen verklemmen, wobei mindestens ein endseitiger Tragarm 37 verschwenkbar ist, um diese Elemente an einer von der bruchgefährdeten Ecke entfernt liegenden Stelle zu unterstützen.

Der obere Träger 19 hat die in Fig. 4 dargestellte Ausbildung. An einem Vierkantrohr 19a ist eine U-Profilschiene 19b fixiert. An den Schenkeln dieser U-Profilschiene 19b kann ein Hängeschränk HS, der mit einem Haken K ausgerüstet ist, so eingehängt werden, wie es auch am späteren Aufstellungsort vorgesehen ist. Der U-Profilschiene 19b ist eine umgekehrt angeordnete weitere U-Profilschiene 19c zugeordnet, die in Richtung des Pfeils P mittels einer zentralen Verstellung in Form einer Kulissenführung 19e höhenverstellbar ist. Auf diese Art und Weise ist es möglich, mit den beiden U-Profilschienen 19b, 19c einen eingehängten Hochschrank HS für den Transport sicher zu verriegeln.

Die Beladung des erfindungsgemäßen Transportwagens am Fertigungsband erfolgt auf folgende Art und Weise:

Die Unterschränke und die Hochschränke werden mit ihren Frontseiten dem Tragrahmen 12 zugewandt auf dem Boden abgestellt, wobei die Unterschränke unter den Tragarmen 33 - 37 und die Hochschränke auf der gegenüberliegenden über die gesamte Höhe freien Seite untergebracht werden.

Eckschränke, die eine größere Tiefe als Unter- und Hochschränke haben, finden im Bereich zwischen den Stützen 15, 18 Platz, wenn die Distanzholme 29 - 31 entfernt werden. Oberschränke können auf beiden Seiten des Tragrahmens 12 mit den Frontseiten nach außen aufgehängt werden. Lange Elemente, wie Arbeitsplatten, Leisten und dergleichen finden auf den Tragarmen 33 - 37 und vor allem in deren vorderen Bereich zwischen den Stützen 35, 37 Platz. Alle Möbelteile werden anschließend mit Spanngurten an den Ösen 32 festgezurrt.

Während die tieferliegenden Teile 6, 7 des Bodens eine ausreichende Ladehöhe für Korpusse bieten, die noch ein Unterbringen des beladenen Transportwagens in einem LKW ermöglicht, ist die freie Ladehöhe auf den stirnseitigen Teilen 4, 5 des Bodens wegen der darunter befindlichen Lenkrollen 8 - 11 zu klein, um diesen Bereich z. B. für Hochschränke auszunutzen. Diese geringere Ladehöhe kann aber genutzt werden, um hier Waschmaschine oder Spülmaschine unterzubringen.

## Patentansprüche

1. Transportwagen für kastenförmige Möbel, insbesondere Küchenmöbel, mit einem Fahrgestell (1 - 3, 8 - 11) und einem Aufbau, der einen Boden (4, 5, 6, 7) zum Aufstellen von Möbeln und einen den Wagen in zwei Längsteile teilenden, aufrechtstehenden Tragrahmen (12) mit Befestigungselementen (19) zum Aufhängen der Möbel aufweist.

2. Transportwagen nach Anspruch 1,
**dadurch gekennzeichnet**, daß die Böden (6, 7) auf gegenüberliegenden Seiten des Tragrahmens (12) gegeneinander höhenversetzt sind.

3. Transportwagen nach Anspruch 1 oder 2,
**dadurch gekennzeichnet**, daß der Tragrahmen (12) in mehreren Ebenen Holme (20 bis 31) mit Distanzelementen aufweist.

4. Transportwagen nach einem der Ansprüche 1 - 3,
**dadurch gekennzeichnet**, daß die Befestigungsmittel (19) im oberen Bereich des Tragrahmens (12) als Profilleisten (19b) ausgebildet sind, in denen die Möbel mit Haken (K) aufhängbar sind.

5. Transportwagen nach Anspruch 4,
**dadurch gekennzeichnet**, daß den Profilleisten (19b) eine Verriegelung (19c, 19d) für die in die Profilleisten (19b) eingreifenden Haken (K) zugeordnet ist.

6. Transportwagen nach Anspruch 5,
**dadurch gekennzeichnet**, daß die Verriegelung (19c, 19d) in einer Kulissenführung (19d) oder einer gelenkgeführten Schiene (19c) besteht.

7. Transportwagen nach einem der Ansprüche 1 - 5,
**dadurch gekennzeichnet**, daß der Tragrahmen (12) mehrere in Wagenlängsrichtung versetzte Tragarme (33 bis 37) aufweist.

8. Transportwagen nach Anspruch 7,
**dadurch gekennzeichnet**, daß mindestens ein endseitiger Tragarm (37) verschwenkbar ist.

9. Transportwagen nach Anspruch 7 oder 8,
**dadurch gekennzeichnet**, daß die Tragarme (33 - 37) mit aufrechtstehenden Stützen (38, 40) bestückt sind.

10. Transportwagen nach Anspruch 8,
**dadurch gekennzeichnet**, daß der Abstand der Stützen (38, 40) zueinander einstellbar ist.

11. Transportwagen nach Anspruch 10,
**dadurch gekennzeichnet**, daß von einem Stützenpaar (38,40) eines oder jedes Tragarmes (33 - 37) eine Stütze (40) von einem Schwenkarm (39) getragen ist.

12. Transportwagen nach einem der Ansprüche 1 - 11,
**dadurch gekennzeichnet**, daß der Boden mehrteilig und mindestens die mittleren Bodenteile (6, 7) hochklappbar sind.
